Europäisches Patentamt

European Patent Office

Office européen des brevets

(19)

(11) Veröffentlichungsnummer: **0 091 675**
**B1**

(12) **EUROPÄISCHE PATENTSCHRIFT**

(45) Veröffentlichungstag der Patentschrift:
13.01.88

(51) Int. Cl.⁴: **B 23 K 37/02, B 23 K 9/02**

(21) Anmeldenummer: 83103451.7

(22) Anmeldetag: 08.04.83

(54) Schweissgerät mit Führungsvorrichtung für Schweissbrenner.

(30) Priorität: 14.04.82 DE 3213734

(43) Veröffentlichungstag der Anmeldung:
19.10.83 Patentblatt 83/42

(45) Bekanntmachung des Hinweises auf die Patenterteilung:
13.01.88 Patentblatt 88/2

(84) Benannte Vertragsstaaten:
AT BE CH DE FR GB IT LI LU NL SE

(56) Entgegenhaltungen:
DD-A-75 689
DD-A-144 881
DE-A-2 949 431
DE-C-515 354
DE-U-1 885 762
US-A-3 543 989

Die Akte enthält technische Angaben, die nach
dem Eingang der Anmeldung eingereicht wurden
und die nicht in dieser Patentschrift enthalten sind.

(73) Patentinhaber: Siemens Aktiengesellschaft Berlin
und München, Wittelsbacherplatz 2, D-8000
München 2 (DE)

(72) Erfinder: Kadlec, Vladimir, Ing.grad., Ingolstädter
Strasse 63 a, D-8000 München 45 (DE)
Erfinder: Vojta, Erich, Melchiorstrasse 10, D-8000
München 71 (DE)
Erfinder: Haspel, Roland, Ing.grad., Ludwigstrasse
1, D-6729 Jockgrim (DE)
Erfinder: Vogt, Werner, Dipl.- Ing., Landeckstrasse
2, D-6741 Rohrbach (DE)

**Beschreibung**

Die Erfindung bezieht sich auf ein Schweißgerät mit Führungsvorrichtung für Schweißbrenner zum Schweißen von Profilrahmen, Gestellen, Schränken oder dergleichen in der Anlagefertigung, bei dem in einem Gehäuse eine in der Längsachse des Gehäuses teleskopartig bewegbare, stellmotorgetriebene Führungsvorrichtung angeordnet ist, an welcher am freien, aus dem Gehäuse herausragenden Ende eine Halterung für den Schweißbrenner angeordnet ist.

Ein derartiges Schweißgerät mit Führungsvorrichtung für Schweißbrenner ist aus DE-U- 1 885 762 bekannt. Bei dem dort beschriebenen Schweißgerät ist auf einem ortsfesten, massiven Führungsbett ein verfahrbarer Kreuzwagen angeordnet, welcher seinerseits einen verfahrbaren Querschlitten trägt. Dieser Querschlitten trägt eine Schwenkspindel, an welcher eine über eine Gewindespindel verfahrbare Halterung für einen mit Hilfe einer Flügelschraube schwenkbaren Schweißbrenner angebracht ist. Zwischen dem Führungsbett und dem Schweißbrenner ist also eine Vielzahl von relativ zueinander beweglichen und mit separaten Antrieben ausgerüsteten Stellgliedern erforderlich, wobei diese Stellglieder ein automatisches Arbeiten des Schweißgerätes in drei Dimensionen ermöglichen. Die Positionierung des Schweißbrenners relativ zu den zu verschweißenden Werkstücken muß ebenfalls über die Stellglieder durch die Betätigung der zugeordneten Antriebe vorgenommen werden, d. h., für die Positionierung ist ein erheblicher Aufwand erforderlich. Außerdem ist mit einer derartigen Vielzahl nacheinander angeordneter Stellglieder durch die Aufsummierung der Einzelfelder eine exakte Führung des Schweißbrenners nicht mehr zu realisieren.

Durch die DE-A- 2 949 431 ist eine manuell handhabbare Führungsvorrichtung für Schweißbrenner bekanntgeworden, mit der winkelig zueinander angeordnete Werkstücke miteinander verschweißt werden können, unabhängig davon, ob sie mittels einer Innen-Schweißnaht oder einer Außen-Schweißnaht miteinander verbunden werden sollen. Bei dieser bekannten Führungsvorrichtung ist an einem mit einem Handgriff versehenen Gehäuse eine Halteeinrichtung für eine Schweißelektrode und ggf. ein Schutzgas-Zuführungsrohr, insbesondere für einen Schutzgas-Schweißbrenner angeordnet, wobei das Gehäuse mit mehreren achsparallelen, in einer gemeinsamen Ebene angeordneten Führungsrädern versehen ist. Mit dieser als Art Wagen ausgebildeten Führungsvorrichtung können winkelig zueinander angeordnete praktisch beliebig lange Werkstücke miteinander verschweißt werden, wobei aber die Gefahr besteht, daß sich dann der Wagen verläuft. Außerdem muß bei durchgehenden Schweinähten das Gerät um 180° umgesetzt werden. Profilrahmen, Gestelle und dgl. können aber mit diesem bekannten Gerät nicht miteinander verschweißt werden, weil kein Platz zum Aufsetzen der am Gehäuse angeordneten Führungsräder vorhanden ist.

Der Erfindung liegt die Aufgabe zugrunde, ein Schweißgerät zu schaffen, mit dem zwar nur begrenzt lange Schweißnähte hergestellt werden können, dafür aber die Schweißnaht ganz exakt gezogen werden kann, und dessen exakte Positionierung relativ zu den zu verschweißenden Teilen mit geringem Aufwand durchgeführt werden kann.

Diese Aufgabe wird gemäß einer ersten Lösung durch folgende Merkmale gelöst:
- Das Gehäuse (2) ist mittels verstellbarer Vorder- und Hinterfüße (8, 9) relativ zu den zu verschweißenden Teilen (10, 11) positionierbar,
- das Gehäuse (2) ist mit mindestens einem Handgriff (1, 19) versehen,
- an dem Gehäuse (2) greift eine Zugentlastung (45) an.
Gemäß einer zweiten Lösung wird die Aufgabe durch folgende Merkmale gelöst:
- Das Gehäuse (2) ist mittels in der Höhe und in Richtung der Längsachse (3) des Gehäuses (2) verstellbaren Positionierstifte (51) relativ zu den zu verschweißenden Teilen (10, 11) positionierbar,
- das Gehäuse ist mit mindestens einem Handgriff (1, 19) versehen,
- an dem Gehäuse (2) greift eine Zugentlastung (45) an.
Die Einstellung der Relativlage zwischen Schweißbrenner und den zu verschweißenden Teilen wird also nicht durch ein mehrdimensionales Verfahren des Schweißbrenners, sondern durch ein Positionieren des gesamten Gehäuses vorgenommen, wobei für das Positionieren entweder verstellbare Vorder- und Hinterfüße oder verstellbare Positionierstifte vorgesehen sind. Eine leichte Handhabung mittels eines am Gehäuse angebrachten Handgriffes wird bei beiden Fällen der Positionierung dadurch erzielt, daß an dem Gehäuse eine Zugentlastung angreift.

Schweißgeräte nach der ersten oder der zweiten Lösung erlauben den Einsatz des WIG-Schweißverfahrens ohne Zusatzwerkstoffe, so daß anschließende Putzarbeiten weitgehend entfallen können. Selbstverständlich können auch andere Schweißverfahren wie das MAG-, MIG- und Plasmaschweißen angewandt werden. Gemäß einer bevorzugten Ausgestaltung der ersten Lösung sind die Vorderfüße in Richtung der Längsachse des Gehäuses verstellbar angeordnet. Die Vorderfüße können dann mit verstellbaren Stützflächen ausgerüstet sein, wobei die Stützflächen vorzugsweise auswechselbar angeordnet sind. Die Stützflächen ermöglichen ein besonders exaktes Positionieren des Schweißgerätes.

Gemäß einer weiteren bevorzugten Ausgestaltung der ersten Lösung sind die Hinterfüße in einer senkrecht zur Längsachse des Gehäuses angeordneten waagerechten Achse schwenkbar und in ihrer Längsrichtung verstellbar angeordnet. Hierbei sind die freien Enden der Hinterfüße vorzugsweise rutschfest ausgebildet.

Gemäß einer besonders bevorzugten Ausgestaltung beider Lösungen der Erfindung ist die Führungsvorrichtung durch eine stufenlos verstellbare, motorgetriebene Spindel antreibbar. Ein derartiger Antrieb wird bevorzugt, obwohl es durchaus möglich ist, anstelle einer motorgetriebenen Spindel eine entsprechende Pneumatik oder Hydraulik zu verwenden.

Ist dem Schweißgerät eine Programmsteuerung zugeordnet, so wird eine halbautomatische Steuererung des Schweißgerätes ermöglicht.

Weitere bevorzugte Ausgestaltungen der Erfindung gehen aus den Ansprüchen 10 bis 16 hervor.

Anhand der Zeichnung, in der zwei Ausführungsbeispiele des Gerätes dargestellt sind, wird die Erfindung näher erläutert.

Es zeigen:

Figur 1 eine Seitenansicht eines Gerätes teilweise im Schnitt,

Figur 2 eine Vorderansicht und

Figur 3 eine Seitenansicht eines Gerätes in abgewandelter Bauform.

In einem mit zwei Handgriffen 1 und 19 versehenen vorzugsweise länglichen Gehäuse 2 ist eine in der Längsachse 3 des Gehäuses teleskopartig bewegbare Führungsvorrichtung 4 angeordnet, an welcher am freien, aus dem Gehäuse 2 herausragenden Ende eine Halterung 5 für einen Schutzgasschweißbrenner angebaut ist. Das Gehäuse 2 ist mit verstellbaren Vorderfüßen 8 und verstellbaren Hinterfüßen 9 versehen. Mit strichpunktierten Linien ist ein Profileisen 10 angedeutet, an dem stirnseitig ein entsprechendes Profileisen 11 angeschweißt werden soll. Zur genauen Justierung des Schweißgerätes sind an den Vorderfüßen 8 mit Hilfe von Schrauben 12 vorzugsweise auswechselbare und verstellbare Stützflächen 13 angeordnet. Das hintere Ende der Vorderfüße 8 ist mit Hilfe einer Schraube 14, welche durch einen Längsschlitz 15 greift, in einer Führung 16, welche zu beiden Seiten des Gehäuses 2 angeordnet sind, festklemmbar. Auf diese Weise können die Vorderfüße 8 in Richtung der Längsachse 3 des Gehäuses 2 verstellt werden, wie durch einen Pfeil 17 angedeutet ist.

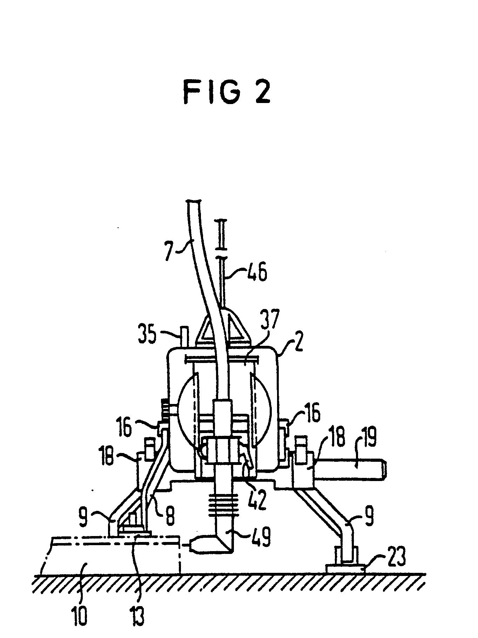

In Figur 2 ist nur ein Vorderfuß 8 dargestellt, da für das vorliegende Schweißproblem nur einer nötig ist. Nach Entfernen der Schraube 14 kann der Fuß 8 aus der Führung 16 herausgezogen und damit entfernt werden, falls er nicht benötigt wird.

Die Hinterfüße 9 sind mit Hilfe einer Muffe 18 auf dem am Gehäuse 2 befestigten Griff 19 in Pfeilrichtung 20 schwenkbar und können außerdem in ihrer Längsrichtung verstellt werden, wie durch einen Doppelpfeil 21 angedeutet ist. Eine am Ende angebrachte Skala 22 dient zur Erleichterung der Einstellung. Am anderen freien Ende der Füße 9 sind Stützteile 23 angelenkt, die an der Auflagefläche rutschfest ausgebildet sind, wie durch Rillen 24 angedeutet ist. Durch diese Verstellmöglichkeiten der Vorder- und Hinterfüße 8 bzw. 9 kann die Längsachse 3 des Gerätes und damit auch der Schweißbrenner um einen bestimmten Winkel zur Horizontalebene geneigt werden. Zur Ermöglichung einer genauen Horizontaleinstellung des Gerätes ist an der Oberseite des Gehäuses 2 eine Wasserwaage 25 angebracht.

Wie zuvor bereits ausgeführt worden ist, ist die Führungsvorrichtung 4 im Gehäuse 2 teleskopartig verschiebbar, wobei mit Hilfe von Rollen 26 eine exakte Führung gewährleistet ist. Die Rollen 26 stützen einen Träger 27 der Führungsvorrichtung ab. Dieser Träger kann beliebig ausgebildet sein; so ist es möglich, daß er im Querschnitt zylinderförmig oder rechteckig ausgebildet ist. Am Träger 27 ist eine Mutter 28 befestigt, so daß mit Hilfe einer ortsfesten Spindel 29 die Führungsvorrichtung 4 in Richtung der Längsachse 3 verstellt werden kann, wie durch einen Doppelpfeil 30 angedeutet ist. Bei dem dargestellten Ausführungsbeispiel erfolgt der Antrieb der Spindel 29 von einem in der Drehzahl regelbaren Gleichstrommotor 31 über Zahnräder 32 und 33. Am Träger 27 ist ferner noch ein Geber 34 angeordnet, der mit berührungslosen Näherungsschaltern 35 zusammenwirkt, welche an der Oberseite des Gehäuses 2 in Richtung der Längsachse 3 verstellbar angeordnet sind, was jedoch in der Zeichnung der Übersicht halber nicht dargestellt ist. Der elektrische Anschluß für den Gleichstrommotor 31 erfolgt über ein elektrisches Kabel 36. Die Halterung 5 für den Schweißbrenner 6, 7 kann mit Hilfe eines in einer Schwalbenschwanznut verstellbaren Schiebers 37 in Pfeilrichtung 38 grob und mit Hilfe eines entsprechenden Schiebers 59 in Pfeilrichtung 40 mit Hilfe einer Stellschraube 41 fein eingestellt und justiert werden. Ferner ist die Halterurung 5 für den Schweißbrenner schwenkbar ausgebildet, wie durch einen Pfeil 42 angedeutet ist. Die Schwenkbewegung kann mit Hilfe eines Hebels 43 justiert werden.

An der Halterung 5 ist ferner noch ein Teil 44 befestigt, der Teil einer Nahtsuchschablone bildet. Das Nahtsuchen kann auch durch andere, z. B. optische Einrichtungen erfolgen.

Wird mit dem Schweißgerät gearbeitet, so ist es erforderlich, daß das Schweißgerät mit einer Zugentlastung, vorzugsweise einer Federzugentlastung 45 ausgestattet ist, die über ein Seil 46 mit einer am Gehäuse 2 befestigten Öse 47 verbunden ist. Die Federzugentlastung 45 ist über ein Seil 48 an der Decke oder dgl. angehängt. Mit dieser Federzugentlastung 45 wird die Handhabung des Schweißgerätes für das Bedienungspersonal ganz wesentlich erleichtert.

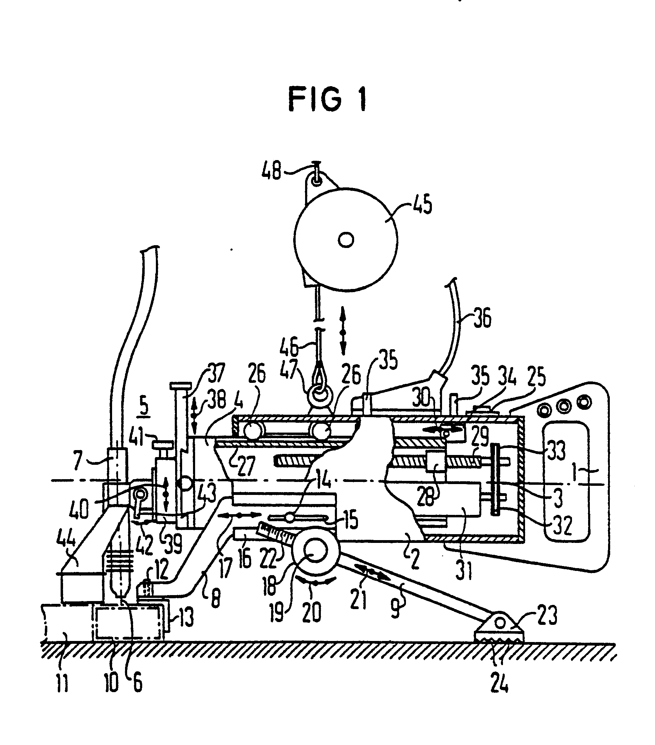

Im Gegensatz zu Figur 1 zeigt Figur 2 einen Winkelschweißbrenner 49, um beispielsweise Seitennähte herstellen zu können.

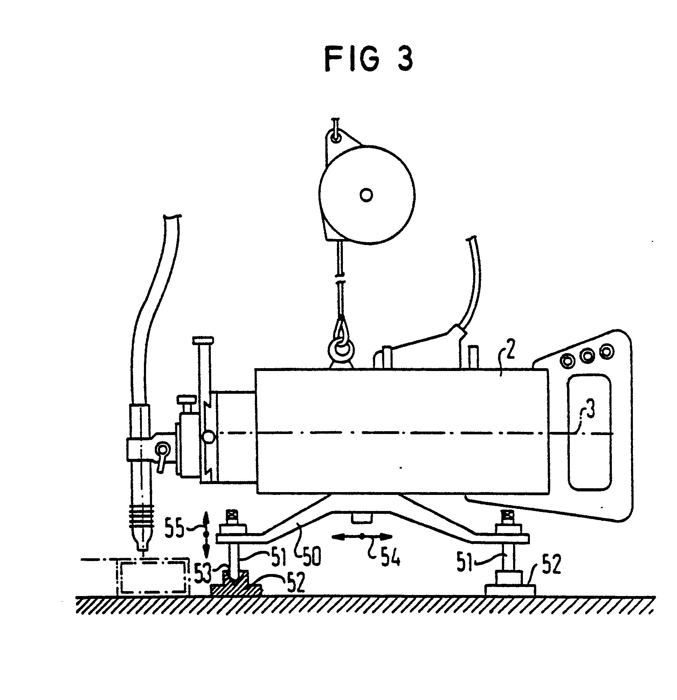

Figur 3 zeigt ein Ausführungsbeispiel, bei dem anstelle der verstellbaren Vorderfüße 8 und Hinterfüße 9 an einem Träger 50 in der Höhe verstellbare Positionierstifte 51 vorgesehen sind, deren untere Enden in Schuhen 52 fixiert sind, mit Hilfe einer konischen Ausnehmung 53. Wie durch einen Pfeil 54 angedeutet ist, kann der Träger 50 am Gehäuse 2 in der Längsachse verstellt werden. Durch einen Pfeil 55 ist angedeutet, daß die Positionierstifte, von denen vorzugsweise drei vorgesehen sind, verstellbar am Träger 50 sind, damit eine bestimmte Achslage einstellbar ist. Diese Ausführung ist besonders dann geeignet, wenn größere Fertigungsstückzahlen vorliegen.

3

**Bezugzeichenliste**

| | | | |
|---|---|---|---|
| 1 | Handgriff | 35 | Näherungsschalter |
| 2 | Gehäuse | 36 | Kabel |
| 3 | Längsachse | 37 | Schieber |
| 4 | Führungsvorrichtung | 38 | Pfeilrichtung |
| 5 | Halterung | 39 | Schieber |
| 6 | Schweißelektrode | 40 | Pfeilrichtung |
| 7 | Schutzgas-Zuführungsrohr | 41 | Stellchraube |
| 8 | Vorderfüße | 42 | Pfeil |
| 9 | Hinterfüße | 43 | Hebel |
| 10 | Profileisen | 44 | Teil |
| 11 | " | 45 | Federzugent-lastung |
| 12 | Schraube | 46 | Seil |
| 13 | Stützflächen | 47 | Öse |
| 14 | Schraube | 48 | Seil |
| 15 | Längsschlitz | 49 | Winkelschweiß-bremse |
| 16 | Führung | 50 | Träger |
| 17 | Pfeil | 51 | Positionierstifte |
| 18 | Muffe | 52 | Schuhe |
| 19 | Handgriff | 53 | konische Aus-nehmung |
| 20 | Pfeilrichtung | 54 | |
| 21 | Doppelpfeil | 55 | Pfeile |
| 22 | Skala | | |
| 23 | Stützteile | | |
| 24 | Rillen | | |
| 25 | Wasser-waage | | |
| 26 | Rollen | | |
| 27 | Träger | | |
| 28 | Mutter | | |
| 29 | Spindel | | |
| 30 | Doppelpfeil | | |
| 31 | Gleichstrommotor | | |
| 32 | Zahnrad | | |
| 33 | " | | |
| 34 | Geber | | |

**Patentansprüche**

1. Schweißgerät mit Führungsvorrichtung (4) für Schweißbrenner (49) zum Schweißen von Profilrahmen, Gestellen, Schränken oder dergleichen in der Anlagenfertigung, bei dem in einem Gehäuse (2) eine in der Längsachse (3) des Gehäuses (2) teleskopartig bewegbare, stellmotorgetriebene Führungsvorrichtung (4) angeordnet ist, an welcher am freien, aus dem Gehäuse (2) herausragenden Ende eine Halterung (5) für den Schweißbrenner (49) angeordnet ist,
gekennzeichnet durch folgende Merkmale:
1.1. das Gehäuse (2) ist mittels verstellbarer Vorder- und Hinterfüße (8, 9) relativ zu den verschweißenden Teilen (10, 11) positionierbar,
1.2. das Gehäuse (2) ist mit mindestens einem Handgriff (1, 19) versehen,
1.3. an dem Gehäuse (2) greift eine Zugentlastung (45) an.
2. Schweißgerät mit Führungsvorrichtung (4), für Schweißbrenner (49) zum Schweißen von Profilrahmen, Gestellen, Schränken oder dergleichen in der Anlagenfertigung, bei dem in einem Gehäuse (2) eine in der Längsachse (3) des Gehäuses (2) teleskopartig bewegbare, stellmotorgetriebene Führungsvorrichtung (4) angeordnet ist, an welcher am freien, aus dem Gehäuse (2) herausragenden Ende eine Halterung (5) für den Schweißbrenner (49) angeordnet ist,
gekennzeichnet durch folgende Merkmale:
2.1. das Gehäuse (2) ist mittels in der Höhe und in Richtung der Längsachse (3) des Gehäuses (2) verstellbaren Positionierstifte (51) relativ zu den zu verschweißenden Teilen (10, 11) positionierbar.
2.2. das Gehäuse (2) ist mit mindestens einem Handgriff (1, 19) versehen,
2.3. an dem Gehäuse (2) greift eine Zugentlastung (45) an.
3. Schweißgerät nach Anspruch 1, dadurch gekennzeichnet, daß die Vorderfüße (8) in Richtung der Längsachse (3) des Gehäuses (2) verstellbar angeordnet sind.

4. Schweißgerät nach Anspruch 3, dadurch <u>gekennzeichnet</u>, daß die Vorderfüße (8) mit verstellbaren Stützflächen (13) ausgestattet sind.

5. Schweißgerät nach Anspruch 4, dadurch <u>gekennzeichnet</u>, daß die Stützflächen (13) auswechselbar angeordnet sind.

6. Schweißgerät nach Anspruch 1 oder einem der Ansprüche 3 bis 5, dadurch <u>gekennzeichnet</u>, daß die Hinterfüße (9) in einer senkrecht zur Längsachse (3) des Gehäuses (2) angeordneten waagrechten Achse schwenkbar und in ihrer Längsrichtung verstellbar angeordnet sind.

7. Schweißgerät nach Anspruch 6, dadurch <u>gekennzeichnet</u>, daß die freien Enden der Hinterfüße (9) rutschfest ausgebildet sind.

8. Schweißgerät nach einem der Ansprüche 1 bis 7, dadurch <u>gekennzeichnet</u>, daß die Führungsvorrichtung (4) durch eine stufenlos verstellbare, motorgetriebene Spindel (29) antreibbar ist.

9. Schweißgerät nach einem der Ansprüche 1 bis 8, dadurch <u>gekennzeichnet</u>, daß dem Schweißgerät eine Programmsteuerung zugeordnet ist.

10. Schweißgerät nach einem der Ansprüche 1 bis 9, dadurch <u>gekennzeichnet</u>, daß der Vorschubweg der Führungsrichtung (4) mit Hilfe von in Achsrichtung verstellbaren berührungslosen Näherungsschaltern (35) vorgebbar ist, die an der Außenseite des Gehäuses (2) angeordnet sind.

11. Schweißgerät nach einem der Ansprüche 1 bis 10, dadurch <u>gekennzeichnet</u> daß die Halterung (5) für den Schweißbrenner (49) höhen- und seitenverstellbar ist.

12. Schweißgerät nach einem der Ansprüche 1 bis 11, dadurch <u>gekennzeichnet</u>, daß die Halterung (5) für den Schweißbrenner (49) schwenkbar ausgebildet ist.

13. Schweißgerät nach einem der Ansprüche 1 bis 12, dadurch <u>gekennzeichnet</u>, daß am Gehäuse (2) eine Wasserwaage (25) vorgesehen ist.

14. Schweißgerät nach einem der Ansprüche 1-14, dadurch <u>gekennzeichnet</u>, daß die Zugentlastung (45) als Federzugentlastung ausgebildet ist.

15. Schweißgerät nach einem der Ansprüche 1 bis 14, dadurch <u>gekennzeichnet</u>, daß mit der bewegbaren Führungsvorrichtung (4) eine Nahtsuchschablone (44) zusammenwirkt.

16. Schweißgerät nach einem der Ansprüche 1 bis 14, dadurch <u>gekennzeichnet</u>, daß mit der bewegbaren Führungsvorrichtung (4) ein optisches Nahtsuchgerät zusammenwirkt.

**Claims**

1. Welding apparatus having a guide device (4) for a welding torch (49), for the welding of profiled frames, racks, cabinets or the like in plant manufacture, wherein in a housing (2), there is arranged a servo-motor-driven guide device (4) which is telescopically movable in the longitudinal axis (3) of the housing (2), and the free end of which projects from the housing (2) and is provided with a holder (5) for the welding torch (43), <u>characterised by</u> the following features:

1.1. the housing (2) can be positioned relative to the parts (10, 11) to be welded by means of adjustable front and rear feet (8, 9),

1.2. the housing (2) is provided with at least one handle (1, 19),

1.3. a tension relief device (45) acts on the housing (2).

2. Welding apparatus having a guide device (4) for welding torches (49) for the welding of profiled frames, racks, cabinets or the like in plant manufacture, wherein in a housing (2), there is arranged a servo-motor-driven guide device (4) which is telescopically movable in the longitudinal axis (3) of the housing (2), and whose free end projects from the housing (2) and is provided with a holder (5) for the welding torch (49), <u>characterised by</u> the following features:

2.1. the housing (2) can be positioned relative to the parts (10, 11), to be welded by means of positioning pins (51) which are adjustable vertically and in the direction of the longitudinal axis (3) of the housing,

2.2. the housing (2) is provided with at least one handle (1, 19),

2.3. a tension relief device acts on the housing (2).

3. A welding apparatus as claimed in Claim 1, <u>characterised in</u> that the front feet (8) are arranged to be adjustable in the direction of the longitudinal axis (3) of the housing (2).

4. Welding apparatus as claimed in Claim 3, <u>characterised in</u> that the front feet (8) are equipped with adjustable support surfaces (13).

5. Welding apparatus as claimed in Claim 4, <u>characterised in</u> that the support surfaces (13) are arranged so as to be exchangeable.

6. Welding apparatus as claimed in Claim 1 or one of Claims 3 to 5, <u>characterised in</u> that the rear feet (9) are arranged so as to be pivotable about a horizontal axis which extends at right angles to the longitudinal axis (3) of the housing (2) and so as to be adjustable in their longitudinal direction.

7. Welding apparatus as claimed in Claim 6, <u>characterised in</u> that the free ends of the rear feet (3) are designed to be slip-resistant.

8. Welding apparatus as claimed in one of Claims 1 to 7, <u>characterised in</u> that the guide device (4) can be driven by a continuously adjustable, motor-driven spindle (29).

9. Welding apparatus as claimed in one of Claims 1 to 8, <u>characterised in</u> that the welding apparatus is

5

allotted a programme control unit.

10. Welding apparatus as claimed in one of Claims 1 to 3, <u>characterised in</u> that the path of movement of the guide device (4) can be preset by means of non-contact proximity switches (35) arranged on the outside of the housing (2) and adjustable in the axial direction.

11. Welding apparatus as claimed in one of Claims 1 to 10, <u>characterised in</u> that the holder (5) for the welding torch (43) is vertically and laterally adjustable.

12. Welding apparatus as claimed in one of Claims 1 to 11, <u>characterised in</u> that the holder (5) for the welding torch (43) is designed to be pivotable.

13. Welding apparatus as claimed in one of Claims 1 to 12, <u>characterised in</u> that a spirit level (25) is provided on the housing (2).

14. Welding apparatus as claimed in one of Claims 1 to 14, <u>characterised in</u> that the tension relief device (45) is in the form of a spring tension relief device.

15. Welding apparatus as claimed in one of Claims 1 to 14, <u>characterised in</u> that a seam-locating template (44) co-operates with the movable guide device (4).

16. Welding apparatus as claimed in one of Claims 1 to 14, <u>characterised</u> in that an optical seam-locating device co-operates with the movable guide device (4).

## Revendications

1. Appareil de soudage comportant un dispositif de guidage (4) pour le chalumeau à souder (49) utilisé pour le soudage de cadres profilés, de châssis, d'armoires ou analogues dans la fabrication d'installations, et dans lequel dans un carter (2) se trouve disposé un dispositif de guidage (4) déplaçable de façon télescopique suivant l'axe longitudinal (3) du carter (2) et entraîné par un servomoteur, et dans lequel un support (5) pour le chalumeau à souder (49) est disposé sur l'extrémité libre, qui fait saillie hors du carter (2), du dispositif de guidage, caractérisé par les caractéristiques suivantes:

1.1. Le carter (2) peut être positionné par rapport aux pièces à souder (10,11), au moyen de pieds avant et arrière réglables (8,9),

1.2. le carter (2) est muni d'au moins une poignée (1,19),

1.3. un dispositif de décharge de la traction est accroché au carter (2).

2. Appareil de soudage comportant un dispositif de guidage (4) pour le chalumeau à souder (49) utilisé pour le soudage de cadres profilés, de châssis, d'armoires ou analogues dans la fabrication d'installations, et dans lequel dans un carter (2) se trouve disposé un dispositif de guidage (4) déplaçable de façon télescopique suivant l'axe longitudinal (3) du carter (2) et entraîné par un servomoteur, et dans lequel un support (5) pour le chalumeau à souder (49) est disposé sur l'extrémité libre, qui fait saillie hors du carter (2), du dispositif de guidage, caractérisé par les caractéristiques suivantes:

2.1. le carter (2) peut être positionné, par rapport aux pièces à souder (10,11), au moyen de broches de positionnement (51) réglables en hauteur et dans la direction de l'axe longitudinal (3) du carter (2),

2.2. le carter (2) comporte au moins une poignée (1,19),

2.3. un dispositif de décharge de la traction (45) est accroché au carter (2).

3. Appareil de soudage suivant la revendication 1, caractérisé par le fait que les pieds avant (8) sont disposés de manière à être réglables dans la direction de l'axe longitudinal (3) du carter (2).

4. Appareil de soudage suivant la revendication 3, caractérisé par le fait que les pieds avant (8) sont équipés de surfaces d'appui réglables (13).

5. Appareil de soudage suivant la revendication 4, caractérisé par le fait que les surfaces d'appui (13) sont disposées de manière à être interchangeables.

6. Appareil de soudage suivant la revendication 1 ou l'une des revendications 3 à 5, caractérisé par le fait que les pieds arrière (9) peuvent pivoter autour d'un axe horizontal, perpendiculaire à l'axe longitudinal (3) du carter (2) et sont disposés de manière à être réglables dans leur direction longitudinale.

7. Appareil de soudage suivant la revendication 6, caractérisé par le fait que les extrémités libres des pieds arrière (9) sont réalisées de façon à être antidérapantes.

8. Appareil de soudage suivant l'une des revendications 1 à 7, caractérisé par le fait que le dispositif de guidage (4) peut être entraînè au moyen d'une broche (29) déplaçable progressivement et entraînée par un moteur.

9. Appareil de soudage suivant l'une des revendications 1 à 8, caractérisé par le fait qu'un dispositif de commande par programme est associé à l'appareil de soudage.

10. Appareil de soudage suivant l'une des revendications 1 à 9, caractérisé par le fait que le trajet d'avance du dispositif de guidage (4) peut être prédéterminée à l'aide de détecteurs de proximité (35) sans contact, réglables suivant la direction axiale et qui sont disposés sur la face extérieure du carter (2).

11. Appareil de soudage suivant l'une des revendications 1 à 10, caractérisé par le fait que le support (5) du chalumeau à souder (49) est réglable en hauteur et latéralement.

12. Appareil de soudage suivant l'une des revenddications 1 à 11, caractérisé par le fait que le support (5) du chalumeau à souder (49) est réalisé de manière à pouvoir pivoter.

13. Appareil de soudage suivant l'une des revendications 1 à 12, caractérisé par le fait qu'un niveau à bulle d'air (25) est prévu sur le carter (2).

14. Appareil de soudage suivant l'une des revendications 1-14, caractérisé par le fait que le dispositif de décharge de la traction (45) est réalisé sous la forme d'un dispositif à ressort de décharge de la traction.

15. Appareil de soudage suivant l'une des revendications 1 à 14, caractérisé par le fait qu'un gabarit (44) de recherche du cordon de soudure coopère avec le dispositif mobile de guidage (4).

16. Appareil de soudage suivant l'une des revendications 1 à 14, caractérisé par le fait qu'un appareil optique de recherche du cordon de soudure coopère avec le dispositif mobile de guidage (4).

# FIG 1

## FIG 2

# FIG 3